# EUROPÄISCHE PATENTANMELDUNG

(11) **EP 1 445 968 A1**
(43) Veröffentlichungstag der Anmeldung: **11.08.2004**
(21) Anmeldenummer: 03002491.3
(22) Anmeldetag: 05.02.2003
(51) Int. Cl.: H04Q 7/38, H04Q 7/32

(54) **Verfahren zur Vorbereitung eines Handovers und entsprechende Netzeinrichtung und Teilnehmerstation**

(71) Anmelder: SIEMENS AKTIENGESELLSCHAFT, 80333 München (DE)
(72) Erfinder: Dillinger, Markus, 81737 München (DE); Lott, Matthias, 82061 Neuried (DE); Schulz, Egon, Dr., 80993 München (DE)

(57) **Zusammenfassung**

Die Erfindung betrifft ein Verfahren zur Kommunikation zwischen einer Teilnehmerstation (MS) und einer ersten Funkzugangseinrichtung (AP) über eine Luftschnittstelle auf einer Funkressource (F1). Erfindungsgemäß übermittelt die erste Funkzugangseinrichtung (AP) an die Teilnehmerstation (MS) Informationen über die Berechtigung der Teilnehmerstation (MS) zur Entscheidung über eine Aufnahme der Kommunikation auf einer anderen Funkressource (F2). Weiterhin betrifft die Erfindung eine Netzeinrichtung (E) mit Mitteln (M) zur Festlegung einer solchen Berechtigung und eine Teilnehmerstation (MS) mit Mitteln zum Empfang von solchen Informationen.

## Beschreibung

Die Erfindung betrifft ein Verfahren zur Kommunikation zwischen einer Teilnehmerstation und einer ersten Funkzugangseinrichtung über eine Luftschnittstelle auf einer Funkressource.

Ferner betrifft die Erfindung eine Netzeinrichtung in einem ersten Funkkommunikationssystem und eine Teilnehmerstation zur Kommunikation mit einer ersten Funkzugangseinrichtung auf einer Funkressource.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Luftschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen oder andere Funkzugangseinrichtungen, sowie gegebenenfalls weitere netzseitige Einrichtungen.

Beispiele für Funkkommunikationssysteme sind zellulare Mobilfunkkommunikationssysteme nach den Standards GSM (Global System for Mobile Communications), GPRS (General Packet Radio Service), EDGE (Enhanced Data Rates for GSM Evolution), UMTS (Universal Mobile Telecommunications System), sowie drahtlose lokale Funkkommunikationssysteme wie IEEE 802.11 oder HIPERLAN/2, sowie weiterhin Satellitensysteme und Verteildienst Systeme wie UMTS-S (Satellite-UMTS), DAB (Digital Audio Broadcasting) und DVB-S/T (Digital Video Broadcasting) und Systeme der vierten Generation.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Dabei findet häufig (zum Beispiel bei GSM, TETRA (Terrestrial Trunked Radio), DECT, UMTS) eine Unterteilung des Übertragungsmediums in Frequenz- und/oder Zeitkanäle entsprechend der Funkschnittstelle statt. Auch Kombinationen mehrerer dieser Verfahren werden angewendet. Die Funkressource einer Funkschnittstelle kann dann zum Beispiel ein Zeitschlitz-Frequenz-Paar oder auch nur eines von beiden (Zeitschlitz oder Frequenz) sein.

In Funkkommunikationssystemen kommunizieren die Teilnehmerstationen mit den Funkzugangseinrichtungen auf einer Funkressource. Unter einem Handover wird der Wechsel der Funkressource, auf welcher eine Teilnehmerstation aktuell kommuniziert, verstanden. Ein Handover kann z.B. dann nötig sein, wenn die Teilnehmerstation sich von einer Funkzelle in eine andere oder auch innerhalb einer Funkzelle bewegt, oder bei einer Verschlechterung der Übertragungsbedingungen auf einer Funkressource.

Ein horizontaler Handover wird durchgeführt, wenn eine Teilnehmerstation von einer Funkzelle bzw. einer Funkzugangseinrichtung eines Funkkommunikationssystems in eine andere Funkzelle bzw. zu einer anderen Funkzugangseinrichtung des gleichen Funkkommunikationssystems wechselt. Kann ein Dienst, der von einer Teilnehmerstation momentan in einem ersten Funkkommunikationssystem genutzt wird, auch in einem zweiten Funkkommunikationssystem realisiert werden, so ist die Durchführung eines vertikalen Handovers als ein Wechsel der Teilnehmerstation von einer Funkzugangseinrichtung des ersten Funkkommunikationssystems zu einer Funkzugangseinrichtung des zweiten Funkkommunikationssystems möglich.

Mit einem Handover sind in der Regel eine Reihe von Messungen und der Austausch von Signalisierungsnachrichten zwischen Teilnehmerstation und Funkzugangseinrichtungen verbunden. Die Entscheidung, ob ein Handover zu einer anderen Funkzugangseinrichtung durchgeführt werden soll oder nicht, kann von der Teilnehmerstation getroffen werden (Mobile Controlled Handover), oder sie kann netzseitig gefällt werden (Network Controlled Handover). Schlägt eine Teilnehmerstation aufgrund von eigenen Messungen einen Handover vor, so unterstützt sie im Rahmen eines Mobile Assisted Handover die Handover Entscheidung, die letztendlich netzseitig getroffen wird. In dem Fall, dass eine Teilnehmerstation entscheidet, dass ein Handover durchgeführt werden soll, spricht man auch von einem Mobile Initiated Handover. Situationsabhängig kann sowohl für einen horizontalen als auch für einen vertikalen Handover entweder eine Entscheidung der Teilnehmerstation oder eine netzseitige Entscheidung über die Durchführung des Handovers vorteilhaft sein.

Der Erfindung liegt die Aufgabe zugrunde, ein Verfahren, eine netzseitige Einrichtung und eine Teilnehmerstation der eingangs genannten Art aufzuzeigen, welche die Durchführung eines geeigneten Handovers ermöglichen.

Diese Aufgabe wird hinsichtlich des Verfahrens gelöst durch ein Verfahren mit den Merkmalen des Anspruchs 1.

Ausgestaltungen und Weiterbildungen sind Gegenstand der Unteransprüche.

Die Teilnehmerstation kommuniziert mit der ersten Funkzugangseinrichtung auf einer Funkressource. Erfindungsgemäß übermittelt die erste Funkzugangseinrichtung an die Teilnehmerstation Informationen über die Berechtigung der Teilnehmerstation zur Entscheidung über eine Aufnahme der Kommunikation auf einer anderen Funkressource.

Die Kommunikation auf der einen Funkressource mit der ersten Funkzugangseinrichtung kann aus einer Übertragung von Nutz- und/oder Signalisierungsinformationen bestehen. In diesem Fall müssen die Informationen über die Berechtigung nicht auf der gleichen Funkressource wie die Nutz- und/oder Signalisierungsinformationen übertragen werden. Es ist auch möglich, dass die Kommunikation auf der einen Funkressource nur aus der Übertragung der Informationen über die Berechtigung besteht.

Die Informationen über die Berechtigung beziehen sich auf eine von der einen Funkressource verschiedene Funkressource. Die andere Funkressource kann sich von der einen Funkressource z.B. durch ihre Frequenz und/oder ihren Code und/oder ihr räumliches Abstrahlungsmuster unterscheiden. Funkressourcen können sich zudem öder alternativ auch dadurch unterscheiden, dass sie von verschiedenen Funkzugangseinrichtungen zur Kommunikation verwendet werden.

Die Teilnehmerstation kann auch, während sie die Informationen von der ersten Funkzugangseinrichtung erhält, mit einer anderen Funkzugangseinrichtung kommunizieren.

Bei der Aufnahme der Kommunikation auf der anderen Funkressource kann es sich um eine Übertragung von Nutz- und/oder Signalisierungsinformationen handeln. Da die Berechtigung die Aufnahme der Kommunikation auf einer anderen Funkressource betrifft, kommuniziert die Teilnehmerstation, welche die Informationen über die Berechtigung empfängt, aktuell nicht auf der anderen Funkressource.

Die Berechtigung bezieht sich auf die Entscheidung über eine Aufnahme der Kommunikation. Hierbei können die Fälle einer positiven Berechtigung, einer negativen Berechtigung und einer partiellen Berechtigung entschieden werden. Bei einer positiven Berechtigung darf die Teilnehmerstation alleine, d.h. ohne Hinzuziehung einer anderen Instanz, eine Entscheidung über die Aufnahme einer Kommunikation fällen. Somit unterstützt die Teilnehmerstation nicht die Entscheidung, sondern fällt sie selbständig, u.U. unter Verwendung von Messergebnissen. Bei einer negativen Berechtigung ist die Teilnehmerstation nicht letztendlich entscheidungsbefugt. Bei einer partiellen Berechtigung kann es sich um eine Berechtigung unter bestimmten Voraussetzungen handeln. Dies könnte z.B. derart ausgestaltet sein, dass die Teilnehmerstation entscheidungsbefugt ist, sofern eine Bedingung, die ihr netzseitig auferlegt werden kann, zutrifft.

In Weiterbildung der Erfindung handelt es sich bei der anderen Funkressource um eine Funkressource der ersten Funkzugangseinrichtung oder um eine Funkressource einer zweiten Funkzugangseinrichtung. Ein Beispiel für eine Funkressource der ersten Funkzugangseinrichtung wäre eine andere Funkfrequenz und/oder ein anderer Code und/oder ein anderer Zeitschlitz und/oder eine andere Abstrahlrichtung von gerichtet strahlenden Antennen. Bei einer Funkressource einer zweiten Funkzugangseinrichtung kann es sich um jede beliebige Funkressource einer anderen als der ersten Funkzugangseinrichtung handeln. Dieser Fall betrifft somit ein Inter-Zell Handover. Die zweite Funkzugangseinrichtung kann Bestandteil des gleichen Funkkommunikationssystems wie die erste Funkzugangseinrichtung oder auch Bestandteil eines anderen Funkkommunikationssystems sein. Die Funkkommunikationssysteme können sich hierbei z.B. durch ihre Funkzugangstechnologie und/oder Übertragungsverfahren und/oder durch Netzwerksbetriebssysteme und/oder Netzwerkprotokolle und/oder durch ihren Betreiber unterscheiden. Es ist auch möglich, dass es sich bei der anderen Funkressource um Funkressourcen einer Mehrzahl von Funkzugangseinrichtungen handelt. So können sich die Informationen auf eine Berechtigung über die Entscheidung über einen Handover zu einer Mehrzahl von potentiellen Handover-Funkressourcen beziehen.

In einer Ausgestaltung der Erfindung indizieren die Informationen ein Verbot an die Teilnehmerstationen, über die Aufnahme der Kommunikation auf der anderen Funkressource zu entscheiden. Den Informationen ist also entnehmbar, dass für die Teilnehmerstation eine Entscheidung über eine Aufnahme der Kommunikation auf der anderen Funkressource nicht erlaubt ist. Vorteilhafterweise entscheidet dann eine mit der ersten und/oder gegebenenfalls mit der zweiten Funkzugangseinrichtung verbundene Einrichtung über die Aufnahme der Kommunikation der Teilnehmerstation auf der anderen Funkressource. Eine Verbindung der Einrichtung mit der zweiten Funkzugangseinrichtung kann gegeben sein, wenn es sich bei der anderen Funkressource um eine Funkressource der zweiten Funkzugangseinrichtung handelt. Bei Bedarf kann bei einer derartigen negativen Berechtigung ein Network Controlled Handover durchgeführt werden.

In einer anderen Ausgestaltung der Erfindung indizieren die Informationen eine Erlaubnis an die Teilnehmerstation, über die Aufnahme der Kommunikation auf der anderen Funkressource zu entscheiden. In diesem Fall kann dann bei Bedarf ein Mobile Controlled Handover durchgeführt werden. Eine solche positive Berechtigung kann mit einer genauen Angabe der Funkressourcen verbunden sein, auf die sich bezieht. Es ist jedoch auch möglich, dass die Berechtigung für jegliche Funkressourcen einer Funkzugangseinrichtung gilt.

Mit Vorteil kann die erste Funkzugangseinrichtung die Informationen wiederholt, insbesondere in regelmäßigen Zeitabständen, senden. Dabei kann sich der Inhalt der Informationen der verschiedenen Versendungen unterscheiden. Die Zeitabstände zwischen den Wiederholungen können z.B. von der Art des oder der Funkkommunikationssysteme, der aktuellen Auslastung derselben, der Kapazität der Teilnehmerstation oder anderen Faktoren abhängen.

In einer bevorzugten Ausführungsform der Erfindung wird der Inhalt der Informationen von einer mit der ersten und/oder gegebenenfalls mit der zweiten Funkzugangseinrichtung verbundenen Einrichtung bestimmt. Eine Verbindung der Einrichtung mit der zweiten Funkzugangseinrichtung kann gegeben sein, wenn es sich bei der anderen Funkressource um eine Funkressource der zweiten Funkzugangseinrichtung handelt. Der Inhalt der Informationen kann aufgrund eines oder mehrerer Kriterien bestimmt werden. Beispiele für derartige Kriterien sind die aktuelle Auslastung des oder der Funkkommunikationssysteme, Parameter der Teilnehmerstation oder Parameter von durch die Teilnehmerstation in Anspruch genommenen Diensten.

Die oben genannte Aufgabe wird bezüglich der Netzeinrichtung gelöst durch eine Netzeinrichtung mit den Merkmalen des Anspruchs 8.

Erfindungsgemäß weist die Netzeinrichtung Mittel zur Festlegung der Berechtigung der mindestens einen Teilnehmerstation zur Entscheidung über eine Aufnahme der Kommunikation auf einer anderen Funkressource auf. Mittel und Vorrichtungen zur Durchführung der Verfahrensschritte können in der Netzeinrichtung vorgesehen sein.

Die erfindungsgemäße Netzeinrichtung muss hierbei baulich nicht von der mindestens einen ersten Funkzugangseinrichtung getrennt sein. So kann auch die mindestens eine erste Funkzugangseinrichtung die Mittel zur Festlegung der Berechtigung aufweisen.

Die oben genannte Aufgabe wird bezüglich der Teilnehmerstation gelöst durch eine Teilnehmerstation mit den Merkmalen des Anspruchs 9.

Erfindungsgemäß weist die Teilnehmerstation Mittel zum Empfangen von Informationen von der ersten Funkzugangseinrichtung über die Berechtigung zur Entscheidung über eine Aufnahme der Kommunikation auf einer anderen Funkressource auf.

Weiterhin kann die erfindungsgemäße Teilnehmerstation Mittel zum Verarbeiten der Informationen über die Berechtigung und zur Entscheidung über eine Aufnahme der Kommunikation auf der anderen Funkressource aufweisen.

Einzelheiten und Details der Erfindung werden im folgenden anhand eines Ausführungsbeispiels erläutert. Dabei zeigen
- Figur 1:: einen Teil zweier Funkkommunikationssysteme,
- Figur 2:: ein Ablaufdiagramm eines erfindungsgemäßen Verfahrens,
- Figur 3:: eine erfindungsgemäße Teilnehmerstation.

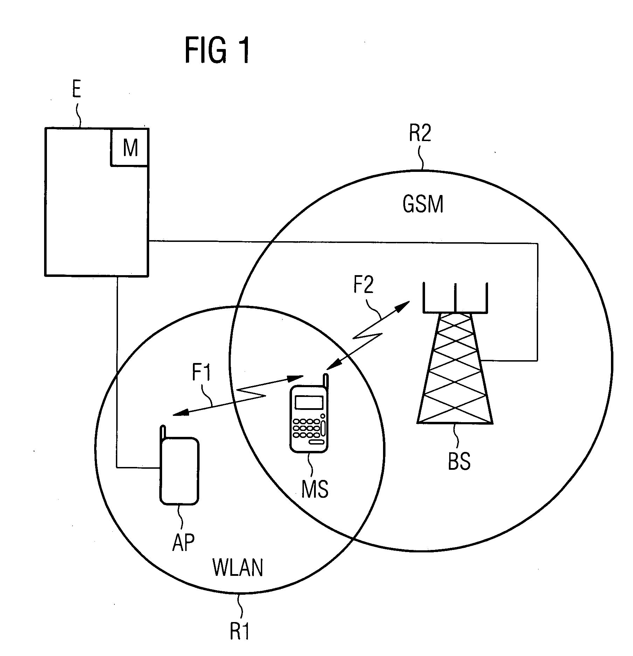

In Figur 1 ist eine Teilnehmerstation MS in Form einer Mobilstation dargestellt. Diese befindet sich innerhalb einer ersten Funkzelle mit dem Rand R1 einer ersten Funkzugangseinrichtung AP (Access Point, Funkzugangspunkt). Diese ist Bestandteil eines lokalen Funkkommunikationssystems WLAN. Die Funkzugangseinrichtung kann in einem lokalen Funknetz mit Infrastruktur eine Anbindung an ein Festnetz aufweisen, während sie in einem Adhoc-Netz als zentrale Kontrollinstanz (Central Controller, CC) eine derartige Anbindung nicht aufweisen muss. Die Mobilstation MS kommuniziert aktuell über Funk mit der Funkzugangseinrichtung AP auf einer Funkressource F1.

Die Mobilstation MS befindet sich zugleich auch innerhalb einer zweiten Funkzelle mit dem Rand R2 einer zweiten Funkzugangseinrichtung BS, wobei es sich bei der zweiten Funkzugangseinrichtung BS um eine Basisstation eines zellularen Mobilfunkkommunikationssystems GSM handelt. Die Mobilstation MS könnte ergänzend oder alternativ auch mit der Funkzugangseinrichtung BS auf einer anderen Funkressource F2 kommunizieren.

Der Wechsel der für eine Kommunikation mit der Mobilstation MS verwendeten Funkzugangseinrichtung kann verschiedene Gründe haben. Neben der Empfangsfeldstärke (Received Signal Code Power, RSCP oder Received Signal Strength Indicator, RSSI), der Bitfehlerwahrscheinlichkeit (Bit Error Rate, BER) oder dem Träger-zu-Interferenz-Verhältnis (Carrier-to-Interference Ratio C/I) kann auch die Distanz zur versorgenden Funkzugangseinrichtung als Kriterium herangezogen werden, ob ein Handover zu einer anderen Funkzugangseinrichtung durchgeführt werden soll.

Zur Vorbereitung eines Handovers führt die Mobilstation MS eine Reihe von Messungen bezüglich der Empfangsqualität von Funksignalen der Funkzugangseinrichtung AP, mit welcher sie aktuell kommuniziert, sowie bezüglich der Empfangsqualität von Funksignalen auf Funkressourcen der Funkzugangseinrichtung BS durch. Ähnliche Messungen können auch durch die Funkzugangseinrichtungen AP und BS an Signalen der Mobilstation MS erfolgen. Aufgrund der Messungen kann entschieden werden, ob ein Handover sinnvoll ist. Die Entscheidung, ob die Mobilstation MS von Funkressourcen der Funkzugangseinrichtung AP zu Funkressourcen der Funkzugangseinrichtung BS wechseln soll, kann entweder von der Mobilstation MS oder von einer netzseitigen Einrichtung eines der beiden oder auch beider Funkkommunikationssystemen WLAN und GSM getroffen werden. Ist es nicht die Mobilstation MS, welche die Entscheidung über einen Handover fällt, so übermittelt diese ihre Messergebnisse im Rahmen eines Mobile Assisted Handovers an die entscheidungsrelevante oder die entscheidungsrelevanten Funkzugangseinrichtungen AP und BS.

Obliegt die Entscheidung über einen Handover der Mobilstation MS (Mobile Controlled Handover), so kann die Situation auftreten, dass die Mobilstation MS entscheidet, zu Funkressourcen der Funkzugangseinrichtung BS zu wechseln, in deren Funkzelle momentan eine hohe Auslastung der Funkressourcen vorliegt. Ein derartiger Zellwechsel der Mobilstation MS würde dann Verfahren zur Angebotskontrolle (Load Control / Load Balance) negativ beeinflussen. In einer derartigen Phase großer Nachfrage nach Funkressourcen in der Zelle der Funkzugangseinrichtung BS ist es nicht empfehlenswert, der Mobilstation MS die Entscheidung über die Durchführung eines Handovers zu Funkressourcen der Funkzugangseinrichtung BS zu überlassen.

Dagegen kann es bei einer niedrigeren Nachfrage nach Funkressourcen bei der Funkzugangseinrichtung BS vorteilhaft sein, der Mobilstation MS die Entscheidungsfreiheit bezüglich eines Handovers zur Funkzugangseinrichtung BS zu gewähren. In diesem Fall kann die Mobilstation MS über den entsprechenden Zellwechsel ohne Versendung von Messberichten entscheiden. Dies führt zu einer Reduzierung des Signalisierungsaufwandes. Nach erfolgter Entscheidung kann die Mobilstation MS dann der Funkzugangseinrichtung BS mitteilen, aus welchem Grund der Handover durchgeführt wurde oder durchgeführt werden soll.

Auch in dem Falle, dass die Mobilstation MS sich schnell bewegt, ist es günstig, ihr die Entscheidungsfreiheit bezüglich eines Handovers zu überlassen. Hierdurch kann die im Falle der sich schnell bewegenden Mobilstation MS besonders nachteilhafte Verzögerung durch den Austausch von Signalisierungsinformation reduziert werden.

Um die Mobilstation MS zu informieren, ob sie berechtigt ist, über einen Handover zu anderen Funkressourcen zu entscheiden oder nicht, wird der Mobilstation MS ein Signal von der Funkzugangseinrichtung AP übermittelt, welches diese Berechtigung anzeigt. Die Entscheidung darüber, ob die Mobilstation MS zur Entscheidung über einen Zellwechsel berechtigt ist, trifft die Einrichtung E, welche mit den beiden Funkzugangseinrichtungen AP und BS direkt oder über weitere Einrichtungen verbunden ist. Hierzu weist die Einrichtung E Mittel M auf, welche geeignet sind, die Berechtigung der Mobilstation MS zur Entscheidung über ein Handover festzulegen.

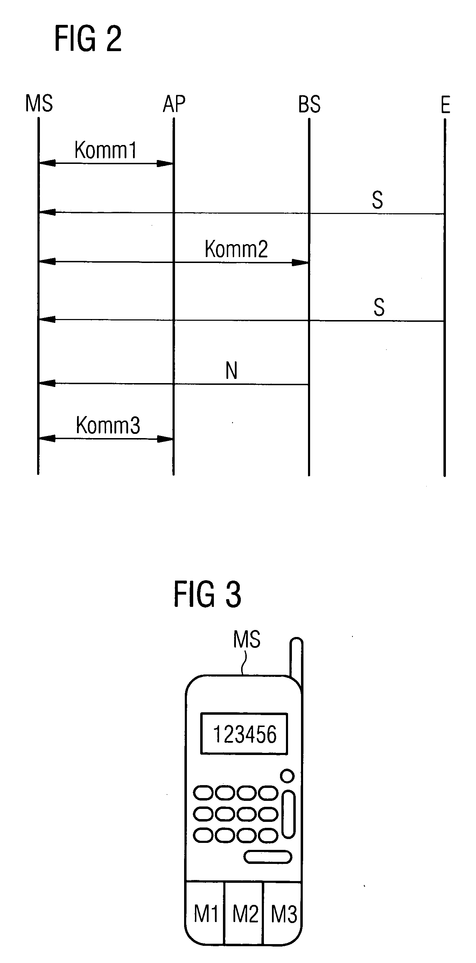

Im betrachteten Beispiel kommuniziert ("Komm1") die Mobilstation MS zuerst mit der Funkzugangseinrichtung AP, wie in Figur 2 durch den doppelten Pfeil schematisch dargestellt. Diese Kommunikation erfolgt auf der Funkressource F1. Weiterhin zeigt Figur 2 den Ablauf des erfindungsgemäßen Verfahrens. Die Einrichtung E entscheidet, dass die Mobilstation MS über einen Wechsel zu Funkressourcen F2 der Funkzugangseinrichtung BS entscheiden darf. Daraufhin sendet die Einrichtung E über die Funkzugangseinrichtung AP ein Signal mit Informationen S, welches der Mobilstation MS die Ermächtigung zur Entscheidung über einen Zellwechsel, d.h. eine Erlaubnis zur Aufnahme der Kommunikation auf Funkressourcen F2 der Basisstation BS, mitteilt. Die Informationen können sich auf mehrere Funkressourcen der zweiten Funkzugangseinrichtung beziehen, wobei die Teilnehmerstation oder die zweite Funkzugangseinrichtung dann entscheiden kann, welche Funkressource für eine Kommunikation verwendet wird. In dem Signal können jedoch die für die Kommunikation gegebenenfalls zu verwendende Funkressource angegeben sein. Das Signal mit den Informationen S kann z.B. in der Übermittlung von Systeminformationen enthalten sein. Es kann auf der gleichen Funkressource R1, auf der die Kommunikation ("Komm1") stattfindet, übertragen werden. Es ist jedoch auch möglich, dieses Signal auf einer von der Funkressource F1 verschiedenen Funkressource zu übertragen. Befindet sich die Mobilstation MS bereits im Funkabdeckungsbereich der Funkzugangseinrichtung BS, so ist es weiterhin möglich, dass die Funkzugangseinrichtung BS der Mobilstation MS das Signal mit den Informationen S übermittelt.

Aufgrund der Berechtigung durch das Signal mit den Informationen S entscheidet die Mobilstation MS im folgenden, einen Handover durchzuführen und kommuniziert ("Komm2") nach Vollendung des Handovers mit der Funkzugangseinrichtung BS. Diese Kommunikation erfolgt auf der Funkressource F2, auf welche die Informationen S bezogen waren. Der Vorgang des Handovers an sich ist nicht Gegenstand der Erfindung. Dieser Vorgang kann mit dem Austausch von verschiedenartiger Signalisierung verbunden sein.

Figur 3 zeigt eine erfindungsgemäße Teilnehmerstation MS. Diese weist Mittel M1 zum Empfangen der Informationen S über die Berechtigung zur Entscheidung über ein Handover auf. Weiterhin sind in der Teilnehmerstation MS Mittel M2 vorhanden, aufgrund derer die Teilnehmerstation MS die Informationen S verarbeiten kann, und Mittel M3, aufgrund derer die Teilnehmerstation MS eine Entscheidung über die Aufnahme der Kommunikation auf einer anderen Funkressource treffen kann.

Die Einrichtung E kann die Erteilung der Berechtigung an die Mobilstation MS von verschiedenen Kriterien abhängig machen. Hierfür können die Nachfrage nach Ressourcen in einer Funkzelle, die Geschwindigkeit eines Teilnehmers, die Energiereserven der Teilnehmerstation in Form der Stand-by-Zeit oder die Anzahl an Teilnehmerstationen in einer Funkzelle in Betracht gezogen werden.

In Figur 2 sendet die Einrichtung E nach erfolgtem Handover der Mobilstation MS zur Funkzugangseinrichtung BS ein weiteres Signal mit Informationen S, welches von der Funkzugangseinrichtung BS an die Mobilstation MS übermittelt wird. Dieses Signal beinhaltet ein Verbot an die Mobilstation MS, zukünftig über einen Zellwechsel, d.h. über die Aufnahme der Kommunikation auf einer Funkressource der Funkzugangseinrichtung AP, zu entscheiden. Daher entscheidet im folgenden eines oder beide der Funkkommunikationssysteme WLAN und GSM der Funkzugangseinrichtungen AP und BS über die Durchführung eines Handovers. Im betrachteten Beispiel wird entschieden, dass die Mobilstation MS einen Wechsel zur Funkzugangseinrichtung AP durchführen soll. Daher sendet die Funkzugangseinrichtung BS der Mobilstation MS ein Signal N, welches der Mobilstation MS die bevorstehende Durchführung des Handovers ankündigt. Nach erfolgtem Handover kommuniziert ("Komm3") die Mobilstation MS mit der Funkzugangseinrichtung AP.

Die Versendung eines Signals mit Informationen S bezüglich der Berechtigung der Mobilstation MS zur Entscheidung über eine Aufnahme der Kommunikation auf einer anderen Funkressource kann immer dann gesendet werden, wenn die Berechtigung geändert wird. Es ist auch möglich; die Nachricht in regelmäßigen Zeitabschnitten zu senden, unabhängig davon, ob die Berechtigung geändert werden soll.

In Abhängigkeit von verschiedenen Parametern, wie z.B. dem Systemzustand der Funkkommunikationssysteme, der Nachfrage nach Funkressourcen, dem zu unterstützenden Dienst oder der Mobilität des Teilnehmers kann somit die Berechtigung der Mobilstation zur Entscheidung über die Durchführung eines Zellwechsels den aktuellen Gegebenheiten angepasst werden. Die Berechtigung kann geändert werden, wenn die Mobilstation einen Handover zu einer anderen Funkzugangseinrichtung durchgeführt hat. Es ist jedoch auch möglich, dass bezüglich der Berechtigung der Mobilstation MS zur Entscheidung über einen Zellwechsel nach erfolgtem Handover keine Änderung erfolgt.

Das beschriebene Verfahren ist auch auf einen horizontalen Handover, d.h. auf einen Zellwechsel innerhalb eines Funkkommunikationssystems, anwendbar. In einem GSM-gemäßen System kann die Einrichtung E dann durch ein BSC (Base Station Controller) oder ein MSC (Mobile Switching Center) realisiert werden, in einem UMTS System durch einen RNC (Radio Network Controller) und in einem lokalen Netz gemäß HIPERLAN/2 oder IEEE 802.11 durch einen APC (Access Point Controller).

Das Verfahren für einen Wechsel der Mobilstation von einer Funkzelle zu einer anderen Funkzelle, d.h. ein Inter-Zell Handover, kann auch auf einen Wechsel von einem Sektor einer Funkzelle zu einem anderen Sektor der gleichen Funkzelle, bzw. von einer Antenne oder Antennenkeule einer Funkzelle zu einer anderen Antenne oder Antennenkeule der Funkzelle, d.h. auf ein Intra-Zell Handover, übertragen werden.

Befinden sich mehrere Teilnehmerstationen in einer Funkzelle, so kann die gleiche Berechtigung zur Entscheidung über eine Aufnahme der Kommunikation auf einer anderen Funkressource an alle Teilnehmerstationen übermittelt werden. Die Berechtigung kann jedoch auch teilnehmer- oder verbindungsspezifisch erfolgen.

## Patentansprüche

1. Verfahren zur Kommunikation zwischen einer Teilnehmerstation (MS) und einer ersten Funkzugangseinrichtung (AP) über eine Luftschnittstelle auf einer Funkressource (F1),
**dadurch gekennzeichnet,**
**dass** die erste Funkzugangseinrichtung (AP) an die Teilnehmerstation (MS) Informationen (S) übermittelt über die Berechtigung der Teilnehmerstation (MS) zur Entscheidung über eine Aufnahme der Kommunikation auf einer anderen Funkressource (F2).

2. Verfahren nach Anspruch 1, **dadurch gekennzeichnet,**
**dass** es sich bei der anderen Funkressource (F2)
- um eine Funkressource der ersten Funkzugangseinrichtung (AP), oder
- um eine Funkressource einer zweiten Funkzugangseinrichtung (BS) handelt.

3. Verfahren nach Anspruch 1 oder 2, **dadurch gekennzeichnet,**
**dass** die Informationen (S) ein Verbot an die Teilnehmerstation (MS) indizieren, über die Aufnahme der Kommunikation auf der anderen Funkressource (F2) zu entscheiden.

4. Verfahren nach Anspruch 3, **dadurch gekennzeichnet,**
**dass** eine mit der ersten und/oder gegebenenfalls mit der zweiten Funkzugangseinrichtung (AP, BS) verbundene Einrichtung (E) über die Aufnahme der Kommunikation der Teilnehmerstation (MS) auf der anderen Funkressource (F2) entscheidet.

5. Verfahren nach Anspruch 1 oder 2, **dadurch gekennzeichnet,**
**dass** die Informationen (S) eine Erlaubnis an die Teilnehmerstation (MS) indizieren, über die Aufnahme der Kommunikation auf der anderen Funkressource (F2) zu entscheiden.

6. Verfahren nach einem der Ansprüche 1 bis 5, **dadurch gekennzeichnet,**
**dass** die erste Funkzugangseinrichtung (AP) die Informationen (S) wiederholt, insbesondere in regelmäßigen Zeitabständen, sendet.

7. Verfahren nach einem der Ansprüche 1 bis 6, **dadurch gekennzeichnet,**
**dass** der Inhalt der Informationen (S) von einer mit der ersten und/oder gegebenenfalls mit der zweiten Funkzugangseinrichtung (AP, BS) verbundenen Einrichtung (E) bestimmt wird.

8. Netzeinrichtung (E) in einem ersten Funkkommunikationssystem (WLAN), umfassend mindestens eine Teilnehmerstation (MS) und mindestens eine erste Funkzugangseinrichtung (AP), welche über eine Luftschnittstelle auf einer Funkressource (F1) kommunizieren,
**dadurch gekennzeichnet,**
**dass** die netzseitige Einrichtung (E) Mittel (M) zur Festlegung der Berechtigung der mindestens einen Teilnehmerstation (MS) zur Entscheidung über eine Aufnahme der Kommunikation auf einer anderen Funkressource (F2) aufweist.

9. Teilnehmerstation (MS) zur Kommunikation mit einer ersten Funkzugangseinrichtung (AP) auf einer Funkressource (F1),
**dadurch gekennzeichnet,**
**dass** sie Mittel (M1) zum Empfangen von Informationen (S) von der ersten Funkzugangseinrichtung (AP) über die Berechtigung zur Entscheidung über eine Aufnahme der Kommunikation auf einer anderen Funkressource (F2) aufweist.
